# EUROPEAN PATENT APPLICATION

(11) **EP 3 872 103 A1**
(43) Date of publication of application: **01.09.2021**
(21) Application number: 20159284.7
(22) Date of filing: 25.02.2020
(51) Int. Cl.: C08F 220/44, C08F 2/04, C08F 2/18, C08F 2/26

(54) **MELT-PROCESSABLE ACRYLONITRILE-BASED COPOLYMERS AND THEIR ACIDIC PRESTABILIZATION FOR CONVERSION INTO CARBON FIBERS AND WORKPIECES**

(71) Applicant: DWI - Leibniz-Institut für Interaktive Materialien e.V., 52074 Aachen (DE); Universität Ulm, 89081 Ulm (DE)
(72) Inventor: KÜHNE, Alexander, 89073 Ulm (DE); MÖLLER, Martin, 52070 Aachen (DE); HOFFMANN, Andreas, 89075 Ulm (DE); USSELMANN, Michael, 89075 Ulm (DE)
(74) Representative: f & e patent

(57) **Abstract**

The present invention relates to thermoplastic copolymers comprising constitutional units derived from acrylonitrile and a co-monomer selected from the acrylates of Formula I, II, III, as defined herein, or mixtures thereof; to a method for making these thermoplastic copolymers; to a method for forming articles comprising melt-processing these copolymers; and to articles formed by said method. The thermoplastic acrylonitrile copolymers of the present invention can be melt-processed into articles of desired shapes including, but not limited to, fibers and filaments, in the absence of water, organic solvents or other external plasticizers by a variety of methods, including, but not limited to, melt-extrusion, melt-spinning, injection molding and/or fused deposition modelling. Once processed into the desired shape, the articles may be transferred into an infusible state by treatment with an acid and subsequently may be converted thermally into carbon material like carbon fibers or carbon workpieces.

## Description

The present invention relates to thermoplastic copolymers comprising constitutional units derived from acrylonitrile and a co-monomer selected from the acrylates of Formula I, II, III, as defined herein, or mixtures thereof; to a method for making these thermoplastic copolymers; to a method for forming articles comprising melt-processing these copolymers; and to articles formed by said method. The thermoplastic acrylonitrile copolymers of the present invention can be melt-processed into articles of desired shapes including, but not limited to, fibers and filaments, in the absence of water, organic solvents or other external plasticizers by a variety of methods, including, but not limited to, melt-extrusion, melt-spinning, injection molding and/or fused deposition modelling. Once processed into the desired shape, the articles may be transferred into an infusible state by treatment with an acid and subsequently may be converted thermally into carbon material like carbon fibers or carbon workpieces.

Due to their low weight and excellent mechanical properties, carbon fiber-based materials have emerged as a powerful alternative to metals, for instance in the aerospace and automotive sector as well as in consumer sports goods. While there is a high demand for carbon fibers, their production costs remain high. In principle, carbon fibers can be prepared from various precursors. Acrylonitrile (co)polymers (PAN) are the most widely precursor material; other precursors like synthetic viscose, aromatic polyamides, 1,2-polybutadiene, pitch and naturally derived materials, such as cellulose or lignin, currently play a subordinate role. The insignificance of alternative precursors is mostly because they exhibit much greater mass loss during thermal carbonization than PAN.

PAN fibers commonly are produced by wet- and dry-spinning techniques, both of which require large amounts of solvents, such as N,N-dimethylformamide or dimethyl sulfoxide. The need for solvent extraction, recycling and/or disposal reduces carbon fiber profitability and sustainability. Further, residues of solvent remaining in the fiber may result in voids and inhomogeneities in the fiber and poor performance during subsequent thermal treatment.

In principle, melt-spinning allows for a higher throughput during fiber production in the absence of solvents, thus avoiding costs for disposal and recycling. Melt processability of PAN could therefore significantly lower the costs for carbon fibers and precursor production.

After PAN fibers have been spun, subsequent stabilization (also referred to as cyclization or oxidation) at temperatures typically ranging from 200 °C to 400 °C in air or another oxygen-containing atmosphere, and carbonization at temperatures typically ranging from 550 °C to 1500 °C in an inert atmosphere are required to convert the PAN precursor fibers into carbon fibers. In the oxidation step, the (co)polymer comprising predominantly acrylonitrile units is converted from a linear structure to a ladder type structure by intramolecular cyclization of pendant nitrile groups and intermolecular crosslinking. This step is required to crosslink the fibers to the point where they cannot be melted or fused together and are stable at the high temperatures of carbonization; otherwise, the fibers would fail in said subsequent step. In the carbonization step, essentially all elements except for carbon are removed from the fibers. Optionally, the carbonized fibers may then be subjected to even higher temperatures in an inert atmosphere in order to improve the alignment and orientation of the crystalline regions along the fiber direction. This optional step is referred to as graphitization.

It will be appreciated that melt-processing, e.g. melt-spinning, requires the acrylonitrile-based (co)polymer to have a good thermal stability at the processing temperature, so that it does not prematurely cyclize, crosslink, or otherwise degrade during melt-processing. During stabilization and carbonization, however, the polymer shall not melt to prevent loss of structural integrity, for instance by fiber fusion.

Due to both intra- and intermolecular interactions of the nitrile groups in acrylonitrile-based polymers, the melting point of PAN homopolymers is usually above its stabilization/decomposition temperature, and a pure PAN homopolymer acts as a duroplastic rather than a thermoplastic. To realize melt-processability of PAN it is necessary disturb the intra- and intermolecular interactions of the nitrile groups. This can be done by adding of small amounts of an external plasticizer, such as water, organic solvent(s) and/or further additives to the polymer or by incorporating co-monomers acting as internal plasticizers into the PAN backbone.

A variety of external plasticizers, amongst them water, organic solvents, and ionic liquids, have been used to decrease the melting temperature of PAN polymers and enable their melt-processing, as it is described e.g. in US 2012/0027944 A1, US 2007/0270529 A1, EP 0 406 709 A2, US 4,238,442 and US 4,163,770. However, during melt-processing such external plasticizers may evaporate, leading to instable melt viscosity and impaired morphology. In EP 3 201 248 B1 external plasticizers with lower vapor pressures were applied to obtain stable melt viscosities.

While fiber-spinning can be conducted using solvents or external plasticizers, other polymer-processing techniques like injection molding and fused deposition modelling cannot be conducted using external plasticizers. Therefore, the geometries and morphologies of carbon workpieces are currently limited to composites comprising carbon-fibers in a resin.

Various attempts have been made to provide thermoplastic PAN polymers that incorporate one or more co-monomers acting as an internal plasticizer. For instance, GB 1 270 504 describes the synthesis of acrylonitrile-based copolymers comprising 8 to 50 wt% of aliphatic, alicyclic alkenes and acrylates as well as 0.2 to 10 wt% sulfonic acid-containing monomers. The copolymers could be extruded at temperatures between 200 and 240 °C. However, the sulfonic acid co-monomer catalyzed cyclization of the nitrile groups already during melt extrusion, resulting in instable melt viscosity, which is detrimental for continuous melt spinning.

GB 1 294 044 describes a copolymer of acrylonitrile with 25-30% of methacrylonitrile and 5-10 % of acrylate or methacrylate. While adding these co-monomers made the resulting material more flexible, the melting temperature could not be reduced sufficiently and melt processing remained inaccessible.

GB 2 356 830 A describes PAN polymers containing 0 to 4% of co-monomers. The resulting polymers could be deformed under high pressure/temperature conditions. However, the materials remained unsuitable for melt processing, which would have required enormous extrusion pressures.

US 3,499,073 describes the synthesis of melt-spinnable PAN homo- and copolymers by organometal catalyzed polymerization. Filaments of a PAN copolymer (comprising 98% acrylonitrile) blended with 10% ethylene carbonate and of a PAN-copolymer (comprising 80% acrylonitrile) were extruded at 295 °C. Furthermore, filaments of a PAN homopolymer were extruded under pressure at 250°C.

US 4,107,252 describes the synthesis of PAN copolymers with styrene and isobutylene, resulting in melt spinnable polymers with melting temperatures between 175 and 260 °C. However, to achieve melt spinning, the percentage of co-monomers had to be raised to levels, at which the steps of stabilization and carbonization required for a subsequent conversion into carbon fibers became impossible.

A PAN graft polymer prepared by polymerizing acrylonitrile to an elastomeric backbone is described in EP 0 030 666 A2. Polymer crosslinking makes said graft copolymer unsuitable for fiber spinning.

US 5,618,901 describes thermoplastic PAN copolymers containing 5 to 50% of various kinds of co-monomers as internal plasticizers. Exemplified are PAN copolymers comprising methylstyrene, styrene, vinyl acetate, methyl methacrylate and methyl acrylate in an amount of 15 wt% or more. These polymers either have too low a percentage of acrylonitrile so that carbonization is impossible or the materials melt again before reaching stabilization temperatures.

Melt spinning of the aforementioned copolymers is described in US 6,144,034. Fibers were spun at 210 °C (polymer having a weight average molecular weight of 55.000 g/mol) and 210 °C (90.000 g/mol). While WO 00/50675 A1 mentions potential applications for these fibers, it only exemplifies extrusion of PAN copolymers comprising 15 wt% methyl acrylate as an internal plasticizer. The problems for converting the material into carbon fibers remain.

EP 3 201 248 B1 describes the synthesis of a melt spinnable PAN copolymer with alkoxy acrylates (5-20 mol%), alkyl acrylates (0-10 mol%) and vinyl ethers (0-10 mol%) as internal plasticizers. These internal plasticizers can be deprotected under basic conditions. Deprotection increases the melting temperature of the resulting copolymer rendering it non-melting at temperatures below or equal to the stabilization temperature. This is a pre-stabilization step, which converts a melt processable material into a thermally stable (infusible) material that will not melt and change shape upon reaching the stabilization temperature. Besides incorporation of internal plasticizers, EP 3 201 248 B1 also claims the additional use of external plasticizers like water or organic solvents, which are added to the polymer before extruding fibers at temperatures between 160 and 220 °C. The polymers exhibit only medium weight average molecular weights of up to 150 kDa, making the fibers unsuitable for high performance applications. In addition, deprotection under basic conditions leads to salt formation. These salts may partially be incorporated into the fibers, potentially impairing their mechanical stability and preventing their application in high performance materials. A similar process is described in US 2017/0298539 A1.

T. Mukundan et al. (Polymer 2006, 47, 4163-4171) address the pre-stabilization by copolymerizing a photosensitive acryloyl benzophenone (ABP) co-monomer into an acrylonitrile-based copolymer. After melt-spinning, the fibers are exposed to UV light, where ABP initiates crosslinking and thus prevents the fibers from melting when reaching the previous melting temperature during stabilization. While this method is elegant, the photosensitive monomers are high in price, instable, and potentially explosive. Furthermore, crosslinking may have a negative impact on the mechanical properties of the resulting carbon fibers due to imperfections within the chemical structure introduced by crosslinking. In addition, the maximum applicable molecular weight of these copolymers seems to be rather limited, as copolymers having a number average molecular weight of about 48,000 g/mol were found not to be melt processable.

It is therefore an object of the present invention to overcome the shortcomings of the above described acrylonitrile-based polymer precursors and processes.

This object is solved by the subject-matter defined in the appended claims. It has surprisingly been found that incorporating a co-monomer selected from the acrylates of Formula I, II, III, as defined herein, or mixtures thereof, into an acrylonitrile-based polymer lowers the glass transition temperature and at the same time raises the on-set temperature of thermal degradation of the resulting copolymer. As a result, copolymers having a wide melt-processing window are obtained. Even copolymers having a considerably higher weight average molecular weight than the acrylonitrile-based polymer described in many prior art documents can be melt-processed without thermally degrading the copolymer. The copolymers of the present invention can be prepared by a variety of copolymerizing methods, including, but not limited to, solution polymerization, emulsion polymerization, dispersion polymerization and/or precipitation polymerization. Further, the copolymers of the present invention can be melt-processed into virtually any desired shape, including, but not limited to, filaments and fibers, by a variety of methods including, but not limited to, melt-extrusion, melt-spinning, injection molding and/or fused deposition modelling at temperatures lower than that described in many prior art documents, even in the absence of external plasticizers. The melt-processed acrylonitrile-based polymer can be converted into an infusible form by treatment with an acid without simultaneously hydrolyzing the nitrile groups in the copolymer. This acidic pre-stabilization steps avoids detrimental salt formation and provides precursors for carbon materials that are free of impurities.

### Summary of the Invention

The following clauses summarize some aspects of the present invention:
A first aspect of the present invention relates to a thermoplastic copolymer comprising constitutional units derived from acrylonitrile and a co-monomer selected from the acrylates of Formula I, II, III, or mixtures thereof: 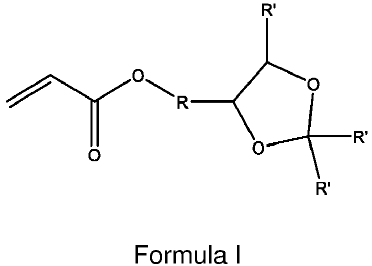 wherein R is a bond or a linear C₁-C₁₈ alkanediyl, a branched C₂-C₁₈ alkanediyl, or a linear or branched C₂-C₁₈ alkenediyl; and each R' independently is hydrogen or a linear C₁-C₁₈ alkyl, a linear C₂-C₁₈ alkenyl or a branched or cyclic C₃-C₁₈ alkyl or alkenyl; 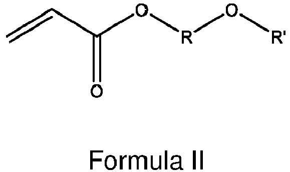 wherein R is a branched C₂-C₁₈ alkanediyl or alkenediyl; and R' is hydrogen or a linear C₁-C₁₈ alkyl, a linear C₂-C₁₈ alkenyl, or a branched or cyclic C₃-C₁₈ alkyl or alkenyl; 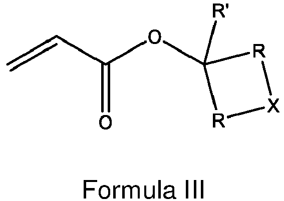 wherein each R independently is a linear C₁-C₁₈ alkanediyl, a linear C₂-C₁₈ alkenediyl, or a branched C₂-C₁₈ alkanediyl or alkenediyl, or one R is a bond; R' is hydrogen or methyl; and X is *C=O, *CH-NH₂, *CH-halogen, *C-halogen, O, *CH-NO₂, *C-NO₂, *CH-COOH, *C-COOH, *CH-OH, *C-OH, *CH₂, *CH, *C(O)O*, or *C(O)O(O)C*,
   wherein optionally one or more methylene groups in each of the above alkyl, alkenyl, alkanediyl and alkenediyl groups independently are replaced by an oxygen atom, provided that no oxygen atom is directly bonded to another oxygen atom.
A second aspect of the present invention relates to the copolymer according to the first aspect having a weight average molecular weight of from 25,000 g/mol to 350,000 g/mol, and preferably of from 26,000 g/mol to 320,000 g/mol, determined according to DIN EN ISO 16014.
A third aspect of the present invention relates to the copolymer according to the first or second aspect having a glass transition temperature Tg of from 55 °C to 100 °C, determined according to DIN EN ISO 11357.
A fourth aspect of the present invention relates to the copolymer according to any one of the preceding aspects made from 78 mol% to 99.4 mol% acrylonitrile and 0.6 mol% to 22 mol% of the co-monomer.
A fifth aspect of the present invention relates to the copolymer according to any one of the preceding aspects wherein the co-monomer comprises an acrylate of Formula I.
A sixth aspect of the present invention relates to the copolymer according to any one of the preceding aspects wherein the co-monomer comprises an acrylate of Formula II.
A seventh aspect of the present invention relates to the copolymer according to any one of the preceding aspects wherein the co-monomer comprises an acrylate of Formula III.
An eighth aspect of the present invention relates to a method for making the thermoplastic copolymer according to any one of the preceding aspects comprising copolymerizing acrylonitrile with the co-monomer.
A ninth aspect of the present invention relates to the method according to the eighth aspect, wherein the acrylonitrile is copolymerized with the co-monomer by solution polymerization, emulsion polymerization, dispersion polymerization or precipitation polymerization.
A tenth aspect of the present invention relates to the method according to the eighth or ninth aspect, wherein the copolymerization is carried out in a solvent which preferably is selected from the group consisting of water, C₁-C₄ alkyl alcohols, dimethyl sulfoxide, N,N-dimethylformamide, N,N-dimethylacetamide, N-methyl-2-pyrrolidone, ethylene carbonate, propylene carbonate, and mixture thereof.
An eleventh aspect of the present invention relates to a method for forming an article comprising a step of: (i) melt-processing the copolymer according to any one of the first through seventh aspects.
A twelfth aspect of the present invention relates to the method according to the eleventh aspect, wherein melt-processing is conducted in the absence of an external plasticizer.
A thirteenth aspect of the present invention relates to the method according to the eleventh or twelfth aspect, wherein melt-processing is conducted at a temperature of 200 °C or less, preferably at a temperature in the range of from 100 °C to 200 °C, and more preferably at a temperature in the range of from 100 °C to 150 °C.
A fourteenth aspect of the present invention relates to the method according to any one of the eleventh through thirteenth aspects, wherein melt-processing the copolymer comprises melt-extruding, melt-spinning, injection molding and/or fused deposition modelling the copolymer.
A fifteenth aspect of the present invention relates to the method according to any one of the eleventh through fourteenth aspects, wherein the copolymer is exposed to heated parts of a melt-processing apparatus for a time being in the range of from 2 to 5 minutes during melt-processing.
A sixteenth aspect of the present invention relates to the method according to any one of the eleventh through fifteenth aspects, wherein melt-processing comprises melt-spinning the copolymer and the article comprises a fiber or filament of the melt-processed copolymer.
A seventeenth aspect of the present invention relates to the method according to any one of the eleventh through sixteenth aspects, wherein the copolymer is compounded with a photoacid or photoacid generator during melt-processing.
An eighteenth aspect of the present invention relates to the method according to any one of the eleventh through seventeenth aspects, wherein the copolymer is compounded with one or more additional component(s) during melt-processing, wherein the additional component(s) preferably is/are selected from the group consisting of organic and inorganic fillers, pigments, and dyes, more preferably from the group of nanoparticulate organic and inorganic fillers, pigments, and dyes.
A nineteenth aspect of the present invention relates to the method according to any one of the eleventh through eighteenth aspects, further comprising a step of: (ii) converting the melt-processed article obtained in step (i) into an infusible state by contacting the melt-processed article obtained in step (i) with an acid.
A twentieth aspect of the present invention relates to the method according to the nineteenth aspect, wherein step (ii) comprises contacting the melt-processed article obtained in step (i) with an acidic solution having a pH of less than 3, preferably a pH in the range of from more than -1 to less than 2, or by activating a photoacid or photoacid generator by irradiation with electromagnetic waves.
A twenty-first aspect of the present invention relates to the method according to the twentieth aspect, wherein the acidic solution is a 3-12 M aqueous solution of a protic acid or a Lewis acid, and preferably is a 3-12 M aqueous solution of a hydrogen halide, sulfuric acid, phosphoric acid, nitric acid, and/or trifluoroacetic acid.
A twenty-second aspect of the present invention relates to the method according to the twentieth or twenty-first aspects, wherein contacting the melt-processed article with the acidic solution comprises immersing the article into a bath of the acidic solution, preferably at a temperature in the range of from 20 °C to 80 °C and/or for a time in the range of from 30 seconds to 24 hours.
A twenty-third aspect of the present invention relates to the method according to the seventeenth through twentieth aspects, wherein the photoacid or photoacid generator is selected from the group consisting of triarylsulfonium salts, diaryliodonium salts, benzyl esters, iminoesters, spiropyranes, and mixtures thereof, and preferably has an excitation wavelength in the range of from 200 nm to 500 nm, more preferably an excitation wavelength in the range of from 250 nm to 420 nm.
A twenty-fourth aspect of the present invention relates to the method according to the twenty-first aspect, wherein the Lewis acid is selected from the group consisting of AlCl₃, B(OH)₃, BF₃, SiCl₄, PF₅, and mixtures thereof.
A twenty-fifth aspect of the present invention relates to the method according to any one of the nineteenth through twenty-fourth aspects, further comprising a step of: (iii) stabilizing the article obtained in step (ii) in an oxygen-containing atmosphere at a temperature in the range of from 180 °C to 400 °C, preferably of from 250 °C to 300 °C.
A twenty-sixth aspect of the present invention relates to the method according to the twenty-fifth aspect, wherein the article is held at the stabilizing temperature for a time being in the range of from 10 minutes to 4 hours, preferably from 0.5 to 1.5 hours.
A twenty-seventh aspect of the present invention relates to the method according to the twenty-fifth or twenty-sixth aspect, further comprising a step of: (iv) carbonizing the article obtained in step (iii) in an inert atmosphere at a temperature of 550 °C or more, preferably at a temperature in the range of from 550 °C to 1500 °C, and more preferably of from 1000 °C to 1300 °C.
A twenty-eighth aspect of the present invention relates to the method according to the twenty-seventh aspect, wherein the article is held at the carbonizing temperature for a time being in the range of from 10 minutes to 12 hours, preferably of from 20 min to 40 min.
A twenty-ninth aspect of the present invention relates to the method according to the twenty-seventh or twenty-eighth aspect, further comprising a step of: (v) graphitizing the article obtained in step (iv) in an inert atmosphere at a temperature of 2000 °C or more, preferably at a temperature in the range of from 2000 °C to 3500 °C, and more preferably of from 2500 °C to 3000 °C.
A thirtieth aspect of the present invention relates to the method according to the twenty-ninth aspect, wherein the article is held at the graphitizing temperature for a time being in the range of from 10 minutes to 12 hours, preferably of from 20 min to 40 min.
A thirty-first aspect of the present invention relates to the method according to any one of the twenty-fifth through thirtieth aspects, wherein step (iii), step (iv) and/or (v) are conducted in a convection oven or by exposing the article to a plasma jet or to microwave or laser irradiation.
A thirty-second aspect of the present invention relates to an article formed by the method according to any one of the eleventh to thirty-first aspects.

### List of Figures

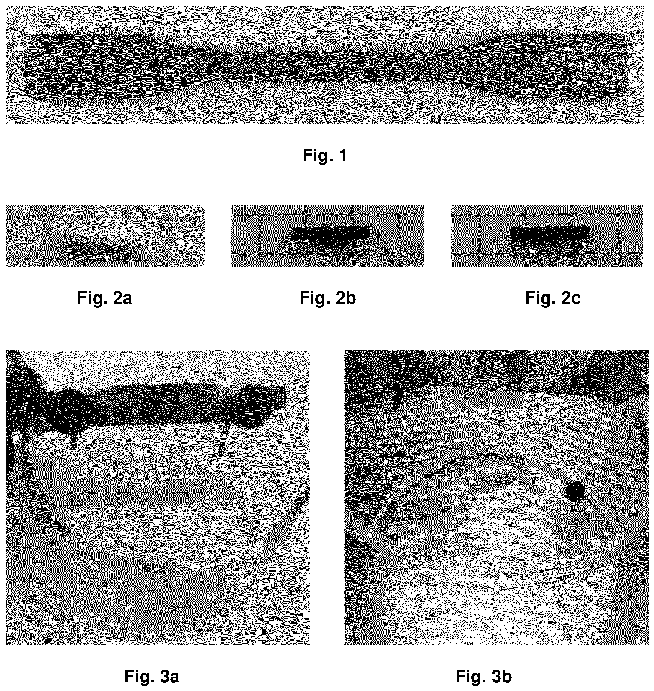

Figure 1 shows an article made by injection molding a thermoplastic polymer according to the present invention, as described in Example 2.
Figure 2a show a fiber melt-spun from the thermoplastic copolymer of the present invention after being subjected to an acidic pre-stabilization step, as described in Example 3. Figure 2b shows the same fiber after being stabilized at 200 °C in air. Figure 2c shows the same fiber after being carbonized at 1000 °C in inert nitrogen atmosphere.
Figure 3a shows a fiber after an acidic pre-stabilization step (on the left-hand side) in comparison to an untreated fiber (on the right-hand side). Figure 3b shows the pre-stabilized fiber after heat treatment (on the left-hand side) in comparison to a non-pre-stabilized fiber after heat treatment (on the right-hand side).

### Detailed Description of the Invention

The present invention relates to a thermoplastic copolymer comprising constitutional units derived from acrylonitrile and a co-monomer selected from the acrylates of Formula I, II, III, or mixtures thereof. As used herein, the term "constitutional units derived from" a monomer refers to those parts contributed to the structure of the copolymer by a monomer after polymerization. For instance, the constitutional unit derived from acrylonitrile CH₂=CH-CN is *-CH₂-CH(CN)-* and the constitutional unit derived from an acrylate CH₂=CH-C(O)OR is *-CH₂-CH(C(O)OR)-*.

The acrylates of Formula I have the following structure: 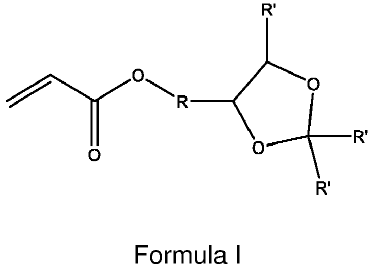 wherein R is a bond or a linear C₁-C₁₈ alkanediyl, a branched C₂-C₁₈ alkanediyl, or a linear or branched C₂-C₁₈ alkenediyl; and each R' independently is hydrogen or a linear C₁-C₁₈ alkyl, a linear C₂-C₁₈ alkenyl or a branched or cyclic C₃-C₁₈ alkyl or branched or cyclic C₃-C₁₈ alkenyl. In a preferred embodiment R may be a bond or a linear C₁-C₆ alkanediyl, a branched C₂-C₆ alkanediyl, or a linear or branched C₂-C₆ alkenediyl; and each R' independently is hydrogen or a linear C₁-C₆ alkyl, a linear C₂-C₆ alkenyl or a branched or cyclic C₃-C₆ alkyl or alkenyl. An exemplary acrylate of Formula I is (2,2-dimethyl-1,3-dioxalan-4-yl)methyl acrylate.

The acrylates of Formula I comprise an ester and a ketal group. The ketal group may be hydrolysed under milder acidic conditions than the ester group or the nitrile groups present in the copolymer.

The acrylates of Formula II have the following structure: 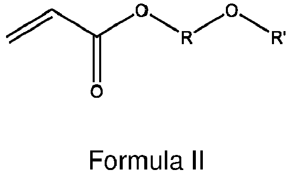 wherein R is a branched C₂-C₁₈ alkanediyl or alkenediyl; and R' is hydrogen or a linear C₁-C₁₈ alkyl, a linear C₂-C₁₈ alkenyl, or a branched or cyclic C₃-C₁₈ alkyl or C₃-C₁₈ alkenyl. In a preferred embodiment R may be a branched C₂-C₆ alkanediyl or alkenediyl; and R' may be hydrogen or a linear C₁-C₆ alkyl, a linear C₂-C₆ alkenyl, or a branched or cyclic C₃-C₆ alkyl or alkenyl. Exemplary acrylates of Formula II are 1-((C₁-C₆) alkoxy)(C₁-C₆)alkan-2-yl acrylates, such as 1-methoxypropan-2-yl acrylate.

The acrylates of Formula III have the following structure: 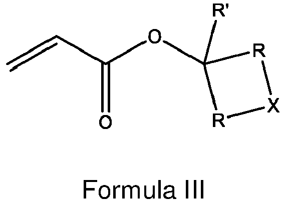 wherein each R independently is a linear C₁-C₁₈ alkanediyl, a linear C₂-C₁₈ alkenediyl, or a branched C₂-C₁₈ alkanediyl or alkenediyl, or one R is a bond, while the other each R is a linear C₁-C₁₈ alkanediyl, a linear C₂-C₁₈ alkenediyl, or a branched C₂-C₁₈ alkanediyl or alkenediyl; R' is hydrogen or methyl; and X is *C=O, *CH-NH₂, *CH-halogen, *C-halogen, O, *CH-NO₂, *C-NO₂, *CH-COOH, *C-COOH, *CH-OH, *C-OH, *CH₂, *CH, *C(O)O*, or *C(O)O(O)C*, where an asterisk indicates the atom attached to a group R. Together with group X and the carbon atom, to which they are attached, the two R groups in Formula III may preferably form a 3- to 6-membered ring, such as, for instance, a cyclohexanone ring.

Optionally one or more methylene groups in each of the alkyl, alkenyl, alkanediyl and alkenediyl groups of Formula I, II, and III may independently be replaced by an oxygen atom, provided that no oxygen atom is directly bonded to another oxygen atom.

The copolymers of the present invention are statistical copolymers.

The weight average molecular weight of the copolymers of the present invention can be adjusted over a wide range. For instance, the copolymers of the present invention may have a weight average molecular weight of from 25,000 g/mol to 350,000 g/mol, and preferably of from 26,000 g/mol to 320,000 g/mol, determined according to DIN EN ISO 16014.

The copolymers of the present invention have surprisingly low glass transition temperatures even when having a rather high weight average molecular weight. The glass transition temperature Tg of copolymers of the present invention typically may range from 55 °C to 100 °C, determined according to DIN EN ISO 11357.

The copolymers of the present invention typically may be made from 78 mol% to 99.4 mol% acrylonitrile and 0.6 mol% to 22 mol% of the co-monomer or mixture of co-monomers, based on the total of all monomers used making the copolymer. The copolymers may comprise of from 78 mol% to 99.4 mol% of constitutional units derived from acrylonitrile and of from 0.6 mol% to 22 mol% of constitutional units derived from a co-monomer Formula I, II, III, or mixtures thereof. Such mixtures include mixtures of co-monomers Formula I and II; I and III; II and III; or I, II, and III. The copolymers may consist exclusively of constitutional units derived from acrylonitrile and a co-monomer of Formula I, II, III, or mixtures thereof, or the copolymers may comprise additional constitutional units derived from further co-monomers, provided that the amount of co-monomer of Formula I, II and/or III is at least 0.6 mol% and that the total amount of constitutional units not derived from acrylonitrile does not exceed 22 mol%, based on the total composition of the copolymer.

In addition to the co-monomer(s) having the structure according to Formula I, II, and/or III, olefinically unsaturated co-monomers having a different structure can be present in the thermoplastic copolymer of the present invention.

Suitable olefinically unsaturated monomers having a C=C double bond polymerizable with acrylonitrile and the co-monomer(s) having the structure according to Formula I, II, and/or III include, but are not limited to, optionally substituted acrylates, methacrylates, acrylamides, methacrylamides, maleic acid and maleates, vinyl esters, vinyl ethers, vinyl amides, vinyl ketones, styrenes, olefins and the like.

Suitable (meth)acrylates not having the structure according to Formula I, II, and/or III include, but are not limited to, alkyl, aryl and cyclic (meth)acrylates, such as, for instance methyl (meth)acrylate or ethyl (meth)acrylate, as well as substituted derivatives thereof, such as 2-hydroxyethyl (meth)acrylate, 2-chloroethyl (meth)acrylate and the like.

Suitable (meth)acrylamides include, but are not limited to, (meth)acrylamide, N-methyl acrylamide, N,N-dimethyl acrylamide and the like.

Suitable vinyl ethers include, but are not limited to, C₁-C₆ vinyl ethers, such as ethyl vinyl ether, butyl vinyl ether and the like. Suitable vinyl esters include, but are not limited to, C₁-C₆ vinyl esters, such as vinyl acetate, vinyl propionate, and the like.

Suitable olefins include, but are not limited to, isoprene, butadiene, C₂-C₈ linear or branched 1-olefins, such as propylene, ethylene, isobutylene, 1-butene and the like, as well as substituted derivates thereof, such as vinyl chloride, vinyl bromide, vinylidene chloride, and the like.

Preferably, the amount of structural units derived from co-monomers not having the structure according to Formula I, II, or III in the thermoplastic copolymers of the present invention does not exceed 5 mol%, based on the total composition of the copolymer. It may be preferred that the thermoplastic copolymer of the present invention do not comprise any additional co-monomers apart from those having the structure according to Formula I, II, and/or III.

The present invention further provides a method for making the thermoplastic copolymer of the present invention. The method comprises copolymerizing acrylonitrile with the co-monomer. The acrylonitrile can be copolymerized with the co-monomer by a variety of methods, including, but not limited to solution polymerization, emulsion polymerization, dispersion polymerization and/or precipitation polymerization.

The copolymerization may be carried out in a solvent. Preferably the solvent may be selected from the group consisting of water, C₁-C₄ alkyl alcohols, such as, for instance, methanol, ethanol, n-propanol, iso-propanol, n-butanol, dimethyl sulfoxide (DMSO), N,N-dimethylformamide (DMF), N,N-dimethylacetamide (DMAC), N-methyl-2-pyrrolidone (NMP), ethylene carbonate, propylene carbonate, and mixture thereof. For instance, a mixture of water and one of the aforementioned organic solvents, such as, for instance, a mixture of water and an C₁-C₄ alkyl alcohol, such as, for instance, a mixture of water and methanol or ethanol, respectively, or a mixture of two organic solvents, such as, for instance, a mixture of DMSO and methanol, may be used. It will be appreciated that the actual choice of solvent will depend on the solubility of the monomers used and the method chosen for polymerization. For example, if the polymerization reaction is carried out in solution, an organic solvent or a mixture of organic solvents, such as DMSO and methanol, may be the solvent of choice. If the polymerization reaction is carried out as a precipitation polymerization, a C₁-C₄ alkyl alcohol, such as, for instance, ethanol, may be the solvent of choice. If the polymerization reaction is carried out as a dispersion polymerization or an emulsion polymerization, water or a buffered aqueous solution not comprising any organic solvents may be the solvent of choice.

The present copolymerization reaction proceeds as a radical polymerization and may be initiated by activating initiators known in the art, including, but not limited to, azo and peroxo compounds, such as peroxides, hydroperoxides, persulfates, perphosphates, redox initiators and mixtures hereof. A preferred initiator may be selected from the group consisting of ammonium and potassium peroxydisulfate and azobis(isobutyronitrile).

In particular if the polymerization reaction is carried out as an emulsion polymerization, a surfactant may be present in the reaction mixture. Suitable surfactants have emulsifying properties and include, but are not limited to, alkyl, alkenyl or aralkyl sulfonates or sulfates as well as fatty acids and soaps thereof, such as, for instance, sodium dodecyl sulfate (SDS). If present, the amount of surfactant typically ranges of from 0.01 to 3.0 wt% and more typically of from 0.1 to 1.0 wt%, based on the total weight of the reaction mixture.

The reaction mixture, from which the copolymer is formed may optionally comprise a chain transfer agent. Suitable chain transfer agents include, but are not limited to, mercaptans, such as, for instance, 1-dodecanethiol. If present, the amount of chain transfer agent typically ranges of from 0.01 to 1.0 wt% and more typically of from 0.05 to 0.5 wt%, based on the total weight of the reaction mixture. Alternatively, the step of copolymerizing acrylonitrile and the co-monomer(s) may be conducted in the absence of a chain transfer agent.

The copolymers of the present invention can be processed into articles of desired shape, including filaments, fibers and workpieces, by melt-processing. Accordingly, the present invention also relates to a method for forming an article comprising a step of (i) melt-processing the copolymer of the present invention. Herein, melt-processing may preferably be conducted in the absence of an external plasticizer, which, as explained above, includes the absence of any added water and/or organic solvents. While preferably no water or organic solvent is added to the thermoplastic polymer of the present invention prior to melt-processing, the thermoplastic polymer of the present invention may comprise residual amounts of water and/or organic from the manufacturing process. The combined amount of residual water and organic solvent in the thermoplastic polymer subjected to melt-processing may be less than 5 wt%, preferably less than 2 wt%, more preferably less than 1 wt.%, and even more preferably less than 0.5 wt.%, based on the combined weight of thermoplastic polymer, water and organic solvent.

Melt-processing may typically be conducted at a temperature of 200 °C or less, preferably at a temperature in the range of from 100 °C to 200 °C, and more preferably at a temperature in the range of from 100 °C to 150 °C.

In the sense of the present invention, melt-processing the copolymer may comprise melt-extruding, melt-spinning, injection molding and/or fused deposition modelling the copolymer.

During melt-extrusion the thermoplastic copolymer of the present invention is passed through a heated screw and one or more heated nozzles.

In melt-spinning, the thermoplastic copolymer of the present invention is melted and extruded through nozzle(s) suitable for forming a fiber or filament of the molten copolymer, typically a spinneret. The fiber or filament emerging from the nozzle(s) are then drawn, cooled, typically by air cooling, and may be wound onto a bobbin. To improve orientation, the fiber or filament may additionally be stretched after cooling.

In injection molding the thermoplastic copolymer of the present invention is fed into a heated device, *e.g.* an extruder, and injected into a mold cavity, where it cools and hardens to the configuration of the cavity.

Fused deposition modelling is a 3D printing process, in which a moving heated printer extruder head is fed by filaments or pellets of the thermoplastic copolymer of the present invention.

During melt-processing the copolymer typically may be exposed to heated parts of a melt-processing apparatus for a time being in the range of from 2 to 5 minutes.

Melt-processing may comprise melt-spinning the copolymer, so that the article of the present invention comprises a fiber or filament of the melt-processed copolymer.

During melt-processing the copolymer may be compounded with a photoacid or photoacid generator.

Photoacids are molecules, which become more acidic upon absorption of light, for instance due to the formation of strong acids upon photodissociation or the dissociation of protons upon photoassociation (*e.g.* ring-closing). Photoacid generators are typically based on onium salts consisting of a triarylsulfonium (Ar₃S⁺) or diaryliodonium (Ar₂I⁺) cation and an anion (X⁻), typically the anion of a super acid, such as BF₄⁻ or PF₆⁻. Upon excitation by light, the cations undergo homolysis to yield iodonium or sulfonium radical cations and C-centered radicals. The C-centered radicals are highly reactive aryl radicals that may react with organic compounds by hydrogen abstraction. The iodonium or sulfonium radical cations also may react by hydrogen abstraction from organic compounds to generate the corresponding hydroiodonium or hydrosulfonium cations. The combination of proton and the original anion act as Bronsted superacid capable of protonating acid-labile functional groups in the constitutional unit derived from the above discussed co-monomers.

The photoacid or photoacid generator may preferably selected from the group consisting of triarylsulfonium salts, diaryliodonium salts, benzyl esters, iminoesters, spiropyranes, and mixtures thereof. The photoacid or photoacid generator may preferably have an excitation wavelength in the range of from 200 nm to 500 nm, more preferably in the range of from 250 nm to 420 nm.

Alternatively or in addition, the copolymer may be compounded with one or more additional component(s) during melt-processing. The additional component(s) may preferably be selected from the group consisting of organic and inorganic fillers, pigments, and dyes, more preferably from the group of nanoparticulate organic and inorganic fillers, pigments, and dyes. Herein, the term "nanoparticulate" refers to a particulate material having at least one dimension of less than 100 nm, as determined by transmission electron microscopy (TEM), and includes, but is not limited to, nanoparticulate material in the form of plates, laminas, tubes, fibers, beads, spheres, and the like, such as nanoparticulate dyes and absorbers, carbon nanotubes, fullerenes, iron oxide, silica, barium titanate, and titanium nitride.

The method of the present invention may further comprise a step of: (ii) converting the melt-processed article obtained in step (i) into an infusible state by contacting the melt-processed article obtained in step (i) with an acid.

In step (ii) acid-labile groups in the constitutional units derived from the co-monomers having the structure according to Formula I, II, and/or III are cleaved, which affects the thermal stability and formability of the copolymer. Step (ii) causes a pre-stabilization of the melt-processed article, so that the copolymer no longer softens and/or melts at the temperature employed in a subsequent step of stabilizing the article in an oxygen-containing atmosphere at temperatures being in the range of from 180 to 400 °C. Otherwise it would not be possible to subject the article to such a stabilizing step without compromising its structural integrity.

Step (ii) may comprise contacting the melt-processed article obtained in step (i) with an acidic solution, which has a pH of less than 3 and preferably may have a pH in the range of from more than -1 to less than 2. Alternatively, a photoacid or photoacid generator compounded with the copolymer during melt-processing or being present in a solution contacted with the melt-processed article may be activated by irradiation with electromagnetic waves.

Typically, the acidic solution brought into contact with the melt-processed article may be a 3-12 M aqueous solution of a protic acid or a Lewis acid. For instance, the acidic solution may preferably be a 3-12 M aqueous solution of a hydrogen halide, sulfuric acid, phosphoric acid, nitric acid, and/or trifluoroacetic acid. If the hydrohalide is HBr, the maximum molar acid concentration preferably may be 7.0 mol/L. If the hydrohalide is HI, the maximum molar acid concentration preferably may be 7.5 mol/L. While the acidic solution may comprise a (co)solvent, such as an C₁-C₄ alkyl alcohol like, e.g. methanol, or ethanol, it may be preferred that the acidic solution does not comprise any organic solvent. The Lewis acid may preferably be selected from the group consisting of AlCl₃, B(OH)₃, BF₃, SiCl₄, PF₅, and mixtures thereof.

Contacting the melt-processed article with the acidic solution may comprise immersing the article into a bath of the acidic solution, preferably at a temperature in the range of from 20 °C to 80 °C and/or for a time in the range of from 30 seconds to 24 hours.

If a photoacid or photoacid generator is compounded with the thermoplastic copolymer of the presented invention during melt-processing or a photoacid or photoacid generator is present in a solution brought into contact with the melt-processed article, e.g. by immersing the melt-processed article into said solution, step (ii) comprises activating the photoacid or photoacid generator by irradiating the article or the solution, respectively, with electromagnetic waves having a suitable wavelength, as discussed above.

After step (ii) of converting the melt-processed article into an infusible state, the method of the present invention further may comprise a step (iii) of stabilizing the article obtained in step (ii) in an oxygen-containing atmosphere at a temperature in the range of from 180 °C to 400 °C, preferably of from 250 °C to 300 °C. During step (iii) the article may be held at the aforementioned stabilizing temperature for a time being typically in the range of from 10 minutes to 4 hours, preferably from 0.5 to 1.5 hours. To bring the article to said temperature, a heating rate typically being in the range of from 0.1 K/min to 10 K/min, preferably of 0.25 K/min to 0.75 K/min may be used.

After step (iii) of stabilizing the article, the method of the present invention may further comprise a step of: (iv) carbonizing the article obtained in step (iii) in an inert atmosphere at a temperature of 550 °C or more, preferably at a temperature in the range of from 550 °C to 1500 °C, and more preferably of from 1000 °C to 1300 °C. During step (iv) the article may be held at the aforementioned carbonizing temperature for a time being in the range of from 10 minutes to 12 hours, preferably of from 20 min to 40 min. To bring the article to said temperature, a heating rate typically being in the range of from 0.1 K/min to 10 K/min, preferably of 0.25 K/min to 0.75 K/min may be used.

As used herein, "an inert atmosphere" refers to an atmosphere being free of oxygen, such as, for instance, an atmosphere of helium, argon, or nitrogen.

After step (iv) of carbonizing the article the method of the present invention may further comprise a step of: (v) graphitizing the article obtained in step (iv) in an inert atmosphere at a temperature of 2000 °C or more, preferably at a temperature in the range of from 2000 °C to 3500 °C, and more preferably of from 2500 °C to 3000 °C. During step (iv) the article may be held at the aforementioned graphitizing temperature for a time being in the range of from 10 minutes to 12 hours, preferably of from 20 min to 40 min. To bring the article to said temperature, a heating rate typically being in the range of from 0.1 K/min to 20 K/min, preferably of 2.5 K/min to 7.5 K/min may be used.

The each of the aforementioned steps (iii), (iv) and (v) may independently conducted by placing the article in a convection oven or by exposing the article to a plasma jet or to microwave or laser irradiation.

The present invention further relates to the articles formed by the above described methods. As previously discussed, the articles may include, but are not limited to, filaments, fibers and workpieces comprising the copolymer of the present invention, or a pre-stabilized, stabilized, carbonized or graphitized form thereof.

The following examples illustrate some aspects of the invention and are not intended to limit the scope of the appended claims.

### EXAMPLES

The following devices were used in the examples:
The DSM Xplore MC5 (Xplore Instruments BV, Sittard, The Netherlands) twin-screw micro compounder is a combined mini-2-screw extruder and compounder.
The DSM Xplore IM 5.5 (Xplore Instruments BV, Sittard, The Netherlands) is a micro-injection molding device.

Melt-extruded material obtained from the micro compounder can be collected in a heated crucible and transferred to the pressure driven injection molding instrument.

The Filastruder Mini extruder (Filastruder, Snellville, USA) is a single screw extruder with a 2.5 mm dye, which exactly fits the diameter of filament for fused deposition modelling. The emergent filament is collected by a Filawinder (Filastruder, Snellville, USA), which is a photocell controlled winding machine collecting the emerging filament on a bobbin.

For 3-D printing a custom-built printer based on fused deposition modelling was used.

Weight average molecular weight (Mw) and polydispersity index (PDI) of the obtained copolymers were determined according to DIN EN ISO 16014.

The glass transition temperature (Tg) of the obtained copolymers was determined according to DIN EN ISO 11357.

### Example 1: Solution polymerization of acrylonitrile with 7 mol% (2,2-dimethyl-1,3-dioxalan-4-yl)methyl acrylate and melt-spinning the resulting copolymer

2.3871 g of (2,2-dimethyl-1,3-dioxalan-4-yl)methyl acrylate, 12.011 mL of acrylonitrile, 322 mg of azobis(isobutyronitrile) (AIBN) and a mixture of 144 mL of DMSO and 96 mL of methanol were placed in a round-bottom flask. The reaction mixture was degassed by bubbling argon through the reaction mixture for 20 minutes, then heated to 70 °C, and stirred at said temperature overnight. After cooling to room temperature the solution was poured into 300 mL water. The precipitated product was filtered off, washed with methanol, and freeze-dried.

The composition of the obtained copolymer was determined by NMR spectroscopy (Bruker, 300 MHz in DMSO-d₆), displaying a plasticizer content of 8.8%, slightly above the target co-monomer ratio. The obtained copolymer had a Mw of 47.300 g/mol with a PDI of 1.29, and a Tg of 84.1 °C.

The copolymer was extruded with a Filastruder Mini extruder at 120 °C.

The filament was then used in a fused deposition modelling 3-D printer to reshape the filament into a dumbbell shape.

### Example 2: Precipitation polymerization of acrylonitrile with 10 mol% (2,2-dimethyl-1,3-dioxalan-4-yl)methyl acrylate and melt-extruding the resulting copolymer

3.412 g of (2,2-dimethyl-1,3-dioxalan-4-yl)methyl acrylate, 12.0 mL of acrylonitrile, 331 mg of AIBN and 180 mL of ethanol were placed in a round-bottom flask. The reaction mixture was degassed by bubbling argon through the reaction mixture for 20 minutes, then heated to 70 °C and stirred at said temperature overnight. After cooling of the reaction mixture, the precipitate was filtered off, washed with water and methanol, and freeze-dried.

The composition of the copolymer was determined by NMR spectroscopy displaying a plasticizer content of 11.3%, slightly above the target co-monomer ratio. The obtained copolymer had a Mw of 26,700 g/mol with a PDI of 1.55, and a Tg of 56.2 °C.

The copolymer was extruded with a DSM twin screw micro compounder at 120 °C, collected in a heated crucible and transferred to a DSM micro injection molding device. Residence time of the copolymer in the compounder was about 10 to 30 min, in the heated crucible about 1 to 10 min and in the injection molding device less than 30 seconds.

The molten polymer was injected into a dumbbell shaped mold, from which the reshaped polymer was removed after cooling. The dumbbell shaped article produced in Example 2 is shown in Figure 1.

### Example 3: Emulsion polymerization of acrylonitrile with 8 mol% (2,2-dimethyl-1,3-dioxalan-4-yl)methyl acrylate and melt spinning followed by pre-stabilization, stabilization and carbonization

0,463 g of (2,2-dimethyl-1,3-dioxalan-4-yl)methyl acrylate,1.6 mL of acrylonitrile, 21.7 mg of potassium peroxydisulfate (KPS), 101.2 mg of sodium dodecyl sulfate (SDS), and 25 mL of a borax/HCI-buffer solution (a solution of 1.00 g borax and 10 mL of 0.1 M HCI in 90 mL water having a pH of 9) were placed in a round-bottom flask. The reaction mixture was degassed by bubbling argon through the reaction mixture for 20 minutes, heated to 70 °C, and stirred at said temperature overnight. After cooling to room temperature, the emulsion was broken by centrifugation. The precipitate was filtered off, washed with water and methanol, and freeze-dried.

The composition of the obtained copolymer product was determined by NMR spectroscopy, displaying a plasticizer content of 7%, slightly below the target co-monomer ratio. The obtained copolymer had a Mw above 200.000 g/mol with a PDI of 1.29, and a Tg of 94.5 °C.

The copolymer was extruded with a DSM twin screw micro-compounder at 120 °C to form fibers of the copolymer.

Such a fiber was treated subsequently with 6 M HCI for 3 h at 80 °C, washed with water and freeze-dried. A picture of said fiber is shown in Figure 2a.

In a next step, the fiber was stabilized in an oven at 200 °C in air without losing its shape - indicating that no melting occurred. A picture of said stabilized fiber is shown in Figure 2b.

The stabilized fiber was carbonized at 1000 °C in inert nitrogen atmosphere. A picture of said carbonized fiber is shown in Figure 2c.

Figure 3a shows a fiber after the above acidic pre-stabilization step (on the left-hand side) in comparison to an untreated fiber (on the right-hand side).

Figure 3b shows the pre-stabilized fiber after stabilization by heat treatment (on the left-hand side) in comparison to a non-pre-stabilized fiber after heat treatment (on the right-hand side).

### Example 4: Dispersion polymerization of acrylonitrile-copolymer with 20 mol% 1-methoxypropan-2-yl acrylate and melt spinning

1.01 g of 1-methoxypropan-2-yl acrylate,1.84 mL of acrylonitrile, 50.0 mg of KPS and 40 mL of water were placed in a round-bottom flask. The reaction mixture was degassed by bubbling argon through the reaction mixture for 20 minutes, heated up to 70 °C and stirred overnight. The warm reaction-mixture was precipitated by adding a saturated aqueous NaCl solution. The precipitate was centrifuged, washed with water and freeze-dried.

The composition of the copolymer product was determined by NMR spectroscopy and a plasticizer content of 19% was observed, which is slightly below the targeted co-monomer ratio. The obtained copolymer had a Mw above 294,000 g/mol with a PDI of 1.26, and a Tg of 80.0 °C.

The copolymer was extruded with the DSM twin-screw micro-compounder at 120 °C.

### Example 5: Emulsion polymerization of acrylonitrile-copolymer with 5 mol% 1-methoxypropan-2-yl acrylate and melt spinning

1.01 g of 1-methoxypropan-2-yl acrylate, 1.84 mL of acrylonitrile, 50.0 mg of KPS and 40 mL of water were placed in a round-bottom flask. 5 mL of an aqueous SDS solution (0.346 mol/L) and 1 mL of an aqueous KPS solution (0.18 mol/L) were added to the reaction mixture. The reaction mixture was degassed by bubbling argon through the reaction mixture for 20 minutes, heated to 70 °C, and stirred overnight. The warm reaction-mixture was precipitated by adding a saturated aqueous NaCl solution. The precipitate was centrifuged, washed with water and freeze-dried.

The composition of the resulting copolymer product was determined by NMR spectroscopy and a plasticizer content of 4 % was determined, which is slightly below the targeted co-monomer ratio. The obtained copolymer had a Mw above 316,000 g/mol with a PDI of 1.37, and a Tg of 91.4 °C.

The copolymer was extruded with the DSM twin-screw micro-compounder at 120 °C.

## Claims

1. A thermoplastic copolymer comprising constitutional units derived from acrylonitrile and a co-monomer selected from the acrylates of Formula I, II, III, or mixtures thereof: 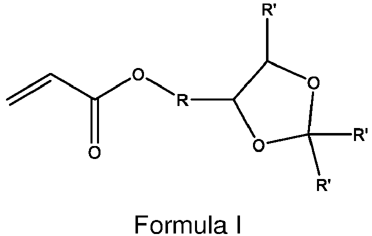 wherein R is a bond or a linear C₁-C₁₈ alkanediyl, a branched C₂-C₁₈ alkanediyl, or a linear or branched C₂-C₁₈ alkenediyl; and each R' independently is hydrogen or a linear C₁-C₁₈ alkyl, a linear C₂-C₁₈ alkenyl or a branched or cyclic C₃-C₁₈ alkyl or alkenyl; 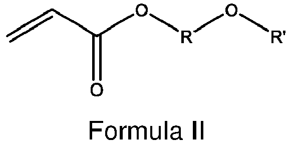 wherein R is a branched C₂-C₁₈ alkanediyl or alkenediyl; and R' is hydrogen or a linear C₁-C₁₈ alkyl, a linear C₂-C₁₈ alkenyl, or a branched or cyclic C₃-C₁₈ alkyl or alkenyl; 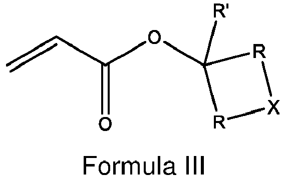 wherein each R independently is a linear C₁-C₁₈ alkanediyl, a linear C₂-C₁₈ alkenediyl, or a branched C₂-C₁₈ alkanediyl or alkenediyl, or one R is a bond; R' is hydrogen or methyl; and X is *C=O, *CH-NH₂, *CH-halogen, *C-halogen, O, *CH-NO₂, *C-NO₂, *CH-COOH, *C-COOH, *CH-OH, *C-OH, *CH₂, *CH, *C(O)O*, or *C(O)O(O)C*,
wherein optionally one or more methylene groups in each of the above alkyl, alkenyl, alkanediyl and alkenediyl groups independently are replaced by an oxygen atom, provided that no oxygen atom is directly bonded to another oxygen atom.

2. The copolymer according to claim 1 having a weight average molecular weight of from 25,000 g/mol to 350,000 g/mol, and preferably of from 26,000 g/mol to 320,000 g/mol, determined according to DIN EN ISO 16014, and/or a glass transition temperature Tg of from 55 °C to 100 °C, determined according to DIN EN ISO 11357.

3. The copolymer according to claims 1 or 2 made from 78 mol% to 99.4 mol% acrylonitrile and 0.6 mol% to 22 mol% of the co-monomer.

4. A method for making the thermoplastic copolymer according to any one of the preceding claims comprising copolymerizing acrylonitrile with the co-monomer.

5. A method for forming an article comprising a step of:
(i) melt-processing the copolymer according to any one of claims 1 to 3.

6. The method according to claim 5, wherein melt-processing is conducted in the absence of an external plasticizer and/or at a temperature of 200 °C or less, preferably at a temperature in the range of from 100 °C to 200 °C, and more preferably at a temperature in the range of from 100 °C to 150 °C.

7. The method according to claims 5 or 6, wherein melt-processing the copolymer comprises melt-extruding, melt-spinning, injection molding and/or fused deposition modelling the copolymer.

8. The method according to any one of claims 5 to 7, wherein melt-processing comprises melt-spinning the copolymer and the article comprises a fiber or filament of the melt-processed copolymer.

9. The method according to any one of claims 5 to 8, wherein the copolymer is compounded with a photoacid or photoacid generator and/or one or more additional component(s) during melt-processing.

10. The method according to any one of claims 5 to 9, further comprising a step of:
(ii) converting the melt-processed article obtained in step (i) into an infusible state by contacting the melt-processed article obtained in step (i) with an acid.

11. The method according to claim 10, wherein step (ii) comprises contacting the melt-processed article obtained in step (i) with an acidic solution having a pH of less than 3, preferably a pH in the range of from more than -1 to less than 2, or by activating a photoacid or photoacid generator by irradiation with electromagnetic waves.

12. The method according to claims 10 or 11, further comprising a step of:
(iii) stabilizing the article obtained in step (ii) in an oxygen-containing atmosphere at a temperature in the range of from 180 °C to 400 °C, preferably of from 250 °C to 300 °C.

13. The method according to claim 12, further comprising a step of:
(iv) carbonizing the article obtained in step (iii) in an inert atmosphere at a temperature of 550 °C or more, preferably at a temperature in the range of from 550 °C to 1500 °C, and more preferably of from 1000 °C to 1300 °C.

14. The method according to claim 13, further comprising a step of:
(v) graphitizing the article obtained in step (iv) in an inert atmosphere at a temperature of 2000 °C or more, preferably at a temperature in the range of from 2000 °C to 3500 °C, and more preferably of from 2500 °C to 3000 °C.

15. An article formed by the method according to any one of claims 5 to 14.
